# EUROPÄISCHE PATENTSCHRIFT

(11) **EP 1 233 248 B1**
(45) Veröffentlichungstag und Bekanntmachung des Hinweises auf die Patenterteilung: **06.10.2004**
(21) Anmeldenummer: 02002341.2
(22) Anmeldetag: 31.01.2002
(51) Int. Cl.: G01C 9/00, A63B 69/36, G01S 15/02, A63B 57/00

(54) **Neigungsmesser**
Inclination measuring instrument
Instrument de mesure d'inclinaison

(30) Priorität: 14.02.2001 DE 10106728
(43) Veröffentlichungstag der Anmeldung: 21.08.2002
(73) Patentinhaber: Golenhofen, Klaus, Prof. Dr. med., 35037 Marburg (DE)
(72) Erfinder: Golenhofen, Klaus, Prof. Dr. med., 35037 Marburg (DE)

(56) Entgegenhaltungen:
- DE-A- 4 336 730
- US-A- 2 629 082
- US-A- 4 082 286
- US-A- 4 824 114
- US-A- 6 095 933
- PATENT ABSTRACTS OF JAPAN vol. 013, no. 291 (P-893), 6. Juli 1989 (1989-07-06) -& JP 01 073276 A (NIPPON AIR BRAKE CO LTD), 17. März 1989 (1989-03-17)

## Beschreibung

Die vorliegende Erfindung betrifft eine Vorrichtung zur Bestimmung der Neigung von Oberflächen, insbesondere auf dem Grün von Golfplätzen.

Beim Golfspiel kommt es darauf an, einen Ball unter Verwendung eines Schlägers mit möglichst wenig Schlägen in genormte Löcher zu befördern, die stets von einer kurz geschnittenen Rasenfläche, dem sogenannten Grün umgeben sind. Dieses Grün weist in der Regel eine von einer Ebene verschiedene Geometrie auf. Da der Ball auf dem Grün praktisch ausschließlich rollen soll, bestimmt die Neigung des Grüns wesentlich die Balltrajektorie. Der Golfspieler muss zur Planung des besten Schlages daher wissen, in welcher Weise die Oberfläche des Grüns geneigt ist. Dazu kann er visuelle Beobachtungen durchführen, deren Verlässlichkeit aber viel Erfahrung voraussetzt, oder er kann Hilfsmittel zu Rate ziehen.

Die US 5,326,096 beschreibt eine Vorrichtung in T-Form, die auf das Grün gelegt wird und bei der zwei senkrecht zueinander angeordnete Wasserwaagen abzulesen sind, so dass Rückschlüsse auf die Neigung der Oberfläche möglich sind.

Die US 6,165,083 zeigt gleichfalls eine auf das Grün zu legende Vorrichtung. Dies ist unerwünscht, weil es ein regelwidriges "Prüfen" des Grüns ermöglichen könnte.

Aus der JP 2000237354 A ist eine Hilfsvorrichtung zur Golfgrünneigungsüberprüfung bekannt mit einem in einer Flüssigkeit aufgehängten Lot, anhand derer für einen Golfspieler durch Vergleich mit exakt Waag- und Senkrechten die Grünneigung besser erfaßbar sein soll.

Aus der US 5,499,199 ist ferner bekannt, die Entfernung zum nächsten Loch mittels Radiosignalen oder einer Kombination von Radio- und Ultraschallsignalen zu bestimmen.

Die DE 38 08 099 C2 beschreibt ein Verfahren zum berührungslosen Messen der Neigung einer Oberfläche eines Objektes in einem beliebigen Medium durch Aussenden von Ultraschallimpulsen mit einem Ultraschallsensor und Erfassen der vom Objekt reflektierten Echoimpulse in einer Auswerte- und Anzeigeeinheit. Die Amplitude und/oder Halbwellenlänge der Echoimpulse soll zur Neigungsbestimmung vermessen werden. Die Anwendung auf ein Golfgrün ist nicht erwähnt.

Die DE 42 31 733 C2 beschreibt ein Verfahren zum dreidimensionalen Abtasten einer Oberfläche zur gleichzeitigen Bestimmung ihrer Anordnung. Es sollen dabei von einer Wandfläche reflektierte Ultraschallwellenmuster erfaßt und erkannt werden, um die Wellenmuster mit bekannten Wellenmustern anderer Wandzusammensetzungen, zu denen Daten zuvor gespeichert wurden, vergleichen zu können. Die Anwendung auf ein Golfgrün ist nicht erwähnt.

Die EP 0146 829 beschreibt eine Ultraschallmessanordnung mit einem Geber, der Echosignale auf ein Objekt zur Bestimmung von dessen geometrischer Eigenschaften sendet. Es wird eine besondere Art der Auswertung von Vergleichssignalen beschrieben. Die Anwendung auf ein Golfgrün ist nicht erwähnt.

Aus DE 4 336 730 and US 2 629 082 sind Anordnungen bekannt, die anhand von Ultraschall- oder Schallwellen eine Neigungsgeometrie bestimmen.

Die Aufgabe der vorliegenden Erfindung besteht darin, Neues für die gewerbliche Anwendung bereitzustellen.

Die Lösung dieser Aufgabe wird in unabhängiger Form beansprucht. Bevorzugte Ausführungsformen finden sich in den Unteransprüchen.

Ein erster wesentlicher Aspekt der vorliegenden Erfindung sieht somit vor, dass nicht nur ein einzelnes Signal emittiert wird, sondern mehrere Signale, die in einem vorgegebenen Winkel zueinander emittiert werden. Die feste Anordnung der Emissionswinkel erlaubt dabei ohne komplexe Vorrichtungen eine einfache Auswertung allein aus einer Zeitmessung der rückempfangenen Signale zur Bestimmung der Flächengeometrie. Zugleich ist es möglich, eine vollkommen berührungslose Messung vorzunehmen, während welcher insbesondere das Grün nicht berührt werden muß. Dies ist vorteilhaft, weil andernfalls, etwa zum Auflegen eines Meßgerätes, das Grün durch Berühren in golfregelwidriger Weise angefaßt werden könnte.

Die Verwendung von Ultraschallsignalen ist besonders vorteilhaft, da Ultraschallsignale leicht und mit preiswerten Mitteln erzeugbar und nachweisbar sind. Es wurde gefunden, dass auch bei durchschnittlichen Windverhältnissen auf Golfplätzen allenfalls geringe Störungen der Messung auftreten.

Es ist bevorzugt, wenn eines der Signale allgemein senkrecht nach unten gesandt wird, was durch eine lotrechte Ausrichtung der Anordnung, etwa durch Aufhängen an einem Fadenpendel oder dergleichen leicht erreicht werden kann. Aus der Laufzeitdifferenz zwischen Signalemission und Rückempfang kann dann auf die Neigung geschlossen werden. Die Verwendung einer weiteren Ultraschallsignalquelle in ebenfalls festem Winkel kann zur Korrektur einer Abstrahlung, die nicht exakt senkrecht nach unten erfolgt, herangezogen werden. Alternativ und/oder zusätzlich kann eine zeitliche Mittelung eines etwa durch Pendeln schwankenden Wertes vorgenommen werden.

Zur Bestimmung der Neigung oder Kippung ist zumindest ein Ultraschall-emittierendes Elementepaar erforderlich; wird nur ein Ultraschall-emittierendes Elementepaar verwendet, so ergibt dies einen besonders einfachen und preiswerten Aufbau. Es sei darauf hingewiesen, daß es möglich ist, mit dem Ultraschall emittierenden Element zugleich auch einen Ultraschallsignalempfang vorzusehen.

Es ist möglich, gleichzeitig die Neigung einer Oberfläche in zwei Richtungen zu bestimmen, wenn mindestens drei Ultraschallquellen verwendet werden, die dann zwei Sensorpaare bilden.

Es sei darauf hingewiesen, dass die Emission der Ultraschallsignale nicht simultan, sondern gegebenenfalls auch sequentiell erfolgen kann, was es ermöglicht, nur einen einzigen Ultraschallempfänger vorsehen zu müssen. Bei Verwendung auf Grünflächen auf Golfplätzen ist dies besonders leicht zu realisieren, da die dort typisch zu vermessenden Entfernungen von Schall so schnell durchlaufen werden, dass die sequentielle Emission der Signale nicht zu einer für den Benutzer merklichen Verzögerung oder Verlängerung der Messung führt.

Die Erfindung wird im Folgenden nur beispielsweise anhand der Zeichnung beschrieben. In dieser zeigt:
- Fig. 1:: eine tragbare Anordnung zur Bestimmung der Geometrie von Oberflächen nach der vorliegenden Erfindung;
- Fig. 2: eine weitere tragbare Anordnung zur Bestimmung der Geometrie von Oberflächen nach der vorliegenden Erfindung.

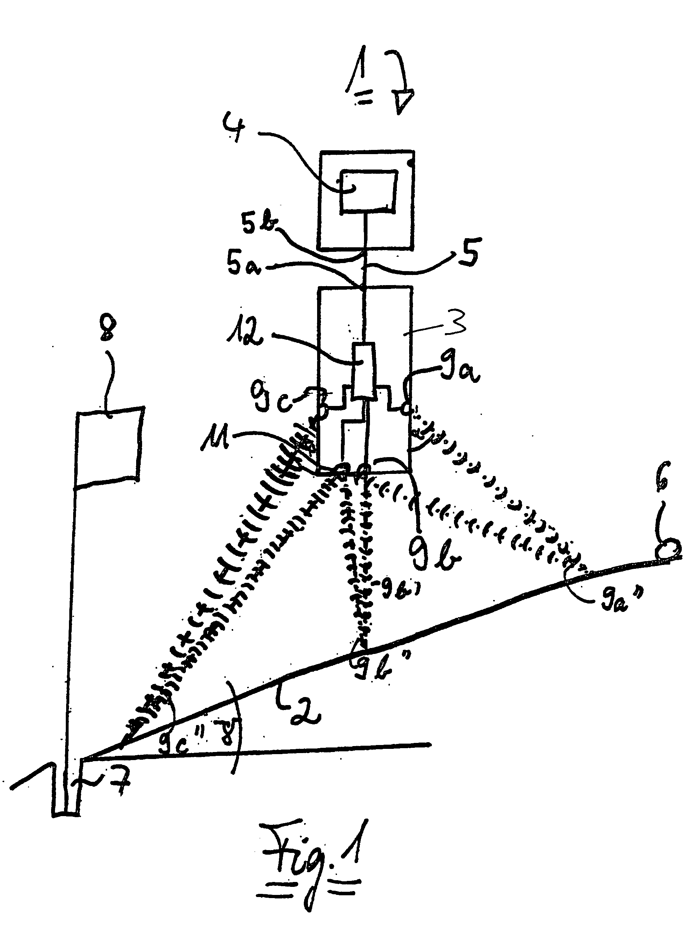

Nach Fig. 1 umfasst eine allgemein mit 1 bezeichnete tragbare Anordnung 1 zur Bestimmung der Neigung einer Oberfläche 2 einen Messkopf 3 und ein Anzeigemittel 4, die über ein Kabel 5 miteinander verbunden sind.

Bei der Oberfläche 2 handelt es sich um ein geneigtes Grün eines Golfplatzes, wie durch den Winkel γ zur Horizontalen 2a angedeutet, und zwar den Bereich zwischen einem Golfball 6, der über die geneigte Fläche in ein Loch 7 zu befördern ist, in welchem aus Gründen der Veranschaulichung noch die vor dem Schlag regelgerecht zu entfernende Fahne 8 eingesteckt ist.

Der Messkopf 3 weist drei Ultraschallsender 9a, 9b, 9c auf, die ihre Ultraschallsignale in einer Ebene emittieren. Die Ultraschallquelle 9b emittiert das Ultraschallsignal allgemein in eine Richtung, die einer Verlängerung der Linie zwischen Kabelaustrittspunkt 5a am Gehäuse 3a des Messkopfes 3 und dem Schwerpunkt 10 des Gehäuses 3a entspricht, so dass das Ultraschallsignal 9b' aus dem Ultraschallsender 9b allgemein senkrecht nach unten emittiert wird, wenn der Messkopf 3 frei am Kabel 5 aufgehängt wird; die Sender 9a und 9c emittieren in vorgegebenem Winkel α = β zu diesem.

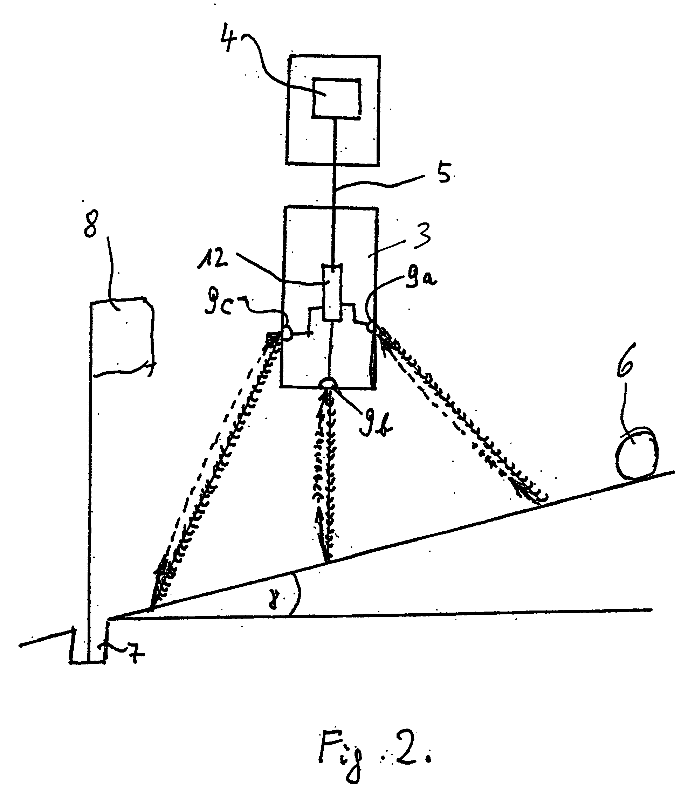

Weiter weist der Messkopf 3 einen Ultraschallempfänger 11 auf, der die von den Auftreffpunkten 9b'', 9a'', 9c " rückreflektierten Ultraschallsignale aufzunehmen vermag. Aus Gründen der Übersichtlichkeit und des besseren Verständnisses sind die Ultraschallempfänger 11 als von den Ultraschallsendern verschiedene Elemente gezeigt; es ist aber ohne weiteres möglich und in einem praktischen Ausführungsbeispiel auch bevorzugt, die Sende- und Empfangsfunktion durch die selben Elemente zu realisieren, d.h. mit dem Sender auch Signale zu empfangen, wie in Fig.2 dargestellt.

Es ist im Messkopf 3 eine Steuerung 12 vorgesehen, die die Ultraschallquellen 9a, 9b, 9c sequentiell erregt und in der Lage ist, die Zeitsignatur der rückgestreut und mit dem Empfänger 11 empfangenen Ultraschallsignale aufzunehmen und auszuwerten. Die Auswertung erfolgt dabei so, dass aus den Laufzeitunterschieden der einzelnen Signale, die, wie ohne weiteres einsichtig ist, neigungsabhängig sind, die allgemeine Neigung γ der Rasenfläche bestimmbar ist. Ein dieser Neigung entsprechender Wert wird über das Kabel 5 an die Anzeigeeinheit 4 gespeist und dort zur Anzeige gebracht. Die Anzeige 4 weist auf ihrer Oberseite eine Anzeigeeinheit auf und an ihrer Unterseite einen Kabeldurchtritt 5b für das Kabel 5. An der Anzeigeeinheit 4 ist weiter ein Auslöseschalter vorgesehen, um eine Messung auszulösen.

Die Anordnung der vorliegenden Erfindung wird benützt wie folgt: Wenn ein Golfspieler mit einem Annäherungsschlag das Grün erreicht hat, bestimmt er zunächst grob die ungefähre Verbindungslinie zwischen Ball 6 und Loch 7. Dann hält er am Anzeigeteil 4 das Gerät 1 über diese als Puttlinie bezeichnete ungefähre Verbindungslinie. Der Messkopf 3 hängt dabei frei am Kabel nach unten, wodurch - unter genäherter Pendelbewegungsvernachlässigung - der Ultraschallsender 9b allgemein senkrecht nach unten emittiert. Nun betätigt der Benutzer den Auslöseschalter, mit dem die Emission von gepulsten Ultraschallsignalen aus den Ultraschallquellen 9a, 9b, 9c durch entsprechende Erregung mittels der Steuerung 12 veranlasst wird. Die darauf rückgestreuten Signale werden zeitaufgelöst am Empfänger 11 erfasst und es wird aus der Zeitsignatur, das heißt aus den Laufzeitunterschieden zwischen den verschiedenen Ultraschallstrahlen 9a, 9b, 9c und der Korrektur auf die Messkopfgeometrie die Neigung γ der Rasenfläche 2 bestimmt. Diese wird zur Anzeige auf dem Gerät 4 gebracht. Der Spieler kennt nun die Neigung und kann seinen Schlag entsprechend der Neigung stärker (bei starker Aufwärtsneigung) oder schwächer (bei starker Abwärtsneigung) gestalten. In alternativer Weise und/oder zusätzlich kann das Gerät noch gedreht werden und es kann nun die seitliche Neigung, der sogenannte Break, des Grüns bestimmt werden, so dass der Golfspieler eine Information darüber erhält, ob der Ball beim Schlag seitlich nach links oder rechts von der geraden Verbindungslinie abweichen wird.

Fig. 2 zeigt eine weitere Variante des erfindungsgemäßen Gerätes, das in seinen prinzipiellen Details gleich ist und deshalb nicht näher beschrieben werden wird. Unterschiedlich ist allerdings, daß aber anstelle getrennter Ultraschallsende- und -empfangselemente die Sende- und Empfangsfunktion durch ein und dasselbe Element realisiert sind.

Es sei darauf hingewiesen, dass es bei beiden Ausführungsformen möglich ist, gleichzeitig Neigung in Schlagrichtung und Break mit einem einzigen Gerät und in einem einzigen Messgang zu bestimmen, indem eine entsprechende Anzahl von Ultraschallsensoren vorgesehen wird. Weiter sei darauf hingewiesen, dass das Gerät ohne weiteres auf verschiedene Höhen, in welcher es über dem Grün gehalten wird, kompensieren kann. Es sei darauf hingewiesen, dass anstelle eines Neigungswinkels auch eine äquivalente Entfernung angezeigt werden kann. Ist beispielsweise der Ball in einer Entfernung von drei Metern zum Loch entfernt, liegt aber eine starke Aufwärtsneigung des Grüns vor, weshalb der Ball stärker geschlagen werden muss, so kann anstelle eines Neigungswinkels die äquivalente Entfernung bei angenommen nicht geneigtem Grün angegeben werden. Dies kann durch Angabe eines Korrekturfaktors geschehen und/oder nach Eingabe der z.B. vom Spieler geschätzten Entfernung vom Ball zum Loch durch Angabe einer äquivalenten Entfernung. Analog kann statt einem seitlichen Break auch eine seitliche Richtungskorrektur für den Schlag in Form der zum Einlochen insbesondere unter Berücksichtigung der gekrümmten Bahntrajektorie anzuspielenden Querentfernung zum Loch angezeigt werden.

Es sei weiter erwähnt, dass die Energieversorgung der Anordnung auf verschiedene Arten erfolgen kann, beispielsweise durch Solarzellen, Batterien, Akkus und so weiter.

## Patentansprüche

1. Tragbare Anordnung (1) zur Bestimmung der Neigungsgeometrie von Rasenflächen, insbesondere von Goifgruns, mit einem Messkopf (3), der Mittel (9a,9b,9c) zur Emission von Signalen in unterschiedlichen Richtungen aufweist, Empfangsmittein (11) zum Empfang von von der Rasenfläche rückgestrahlten Signalen aus unterschiedlichen Richtungen, Auswertemitteln (12) zur Bestimmung der Neigungsgeometrie aus der Zeitdifferenz der rückempfangenen Signale und einer Anzeigeeinheit (4) zur Neigungsanzeige, **dadurch gekennzeichnet, dass** der Messkopf (3) und die Anzeigeeinheit (4) über ein Kabel (5) miteinander verbunden sind, so dass im Gebrauch der Messkopf (3) frei am Kabel (5) hängt.

2. Anordnung nach Anspruch 1, **dadurch gekennzeichnet, dass** eines der Signale zumindest allgemein senkrecht nach unten emittierbar ist.

3. Anordnung nach einem der vorhergehenden Ansprüche, **dadurch gekennzeichnet, dass** die Signale Ultraschallsignale sind.

4. Anordnung nach einem der vorhergehenden Ansprüche, **dadurch gekennzeichnet, dass** zumindest drei Signale emittierbar sind und die Oberflächenneigung aus der Zeitsignatur des Empfangs der drei rückgestreuten Signale bestimmbar ist.

5. Anordnung nach Anspruch 4, **dadurch gekennzeichnet, dass** die drei Signale in einer Ebene emittierbar sind.

6. Anordnung nach Anspruch 5, **dadurch gekennzeichnet, dass** zumindest ein Signal in einer von der durch die drei Signalstrahlen definierten verschiedenen Ebene emittierbar ist und die Rückstreuung des zugehörigen Signals bei der Geometriebestimmung heranziehbar ist.

7. Verfahren zur Messung der Neigung eines Golfgrüns, **dadurch gekennzeichnet, dass** eine Anordnung nach einem der vorhergehenden Ansprüche über der Verbindungslinie zwischen Ball und Loch positioniert wird und dass eine der Grössen Neigung der Verbindungslinie oder seitliche Kippung der Grünfläche im Bereich des geplanten Ballaufes bestimmt wird.

8. Verfahren nach Anspruch 7, **dadurch gekennzeichnet, dass** als Messwert eine äquivalente Entfernung bzw. eine anzuspielende Querentfernung angezeigt wird.

## Claims

1. A portable device (1) for measuring the slope of a grass surface, especially of golf greens, consisting of a measuring unit (3) which has devices (9a, 9b, 9c) for emission of signals in different directions, and devices (11) for receiving signals reflected from the green from different directions. Furthermore it contains devices (12) for determining the slope of the green from the time delay of the reflected signals, and a display unit (4) for indicating the slope, **characterized by** the fact that the measuring unit (3) and the display unit (4) are connected by a cable (5) which is freeely movable.

2. An arrangement according to claim 1, in which one of the signals is emitted vertically downwards.

3. An arrangement according to the preceding claims, in which the emitted signals are ultrasound signals.

4. An arrangement according to one of the preceding claims, in which at least three signals are emitted and the slope of the surface is calculated from the time characteristics of the reflected signals.

5. An arrangement according to claim 4, in which the signals are emitted in the same plane.

6. An arrangement according to claim 5, in which at least one signal is emitted in a plane which is different from the plane determined by the three signals, and the reflex from this signal is included in the calculation of the slope.

7. An arrangement for determination of the slope of a golf green, in which a device according to one of the preceding claims is positioned over the line connecting ball and hole, and that the slope of the connecting line or the lateral break is calculated for the region in which the ball is planned to roll.

8. An arrangement according to claim 7, in which an equivalent distance or an equivalent break-distance is calculated and indicated.

## Revendications

1. Dispositif portable(1) pour mesurer la pente des pelouses, en particulier des greens de golf qui consiste en un module de mesure (3). Ce module présente des dispositifs (9a, 9b, 9c) pour émettre des signaux dans différentes directions et des dispositifs (11) pour recevoir des signaux reflétés par le green venant de différentes directions. De plus il contient des dispositifs (12) qui mesurent la pente du green grâce à la différence de temps des signaux reflétés et une unité marqueur (4) pour indiquer la pente, **caractérisé en ce que** le module de mesure(3) et le marqueur (4) sont reliés par un câble (5) de manière que le module (3) soit mobile sur le câble (5).

2. Dispositif selon la revendication 1, **caractérisé en ce qu'** au moins un des signaux puisse être émis verticalement vers le bas.

3. Dispositif selon une des revendications précédentes, **caractérisé en ce que** les signaux émis sont des signaux ultra-son.

4. Dispositif selon une des revendications précédentes, **caractérisés en ce qu'** au moins trois signaux sont émis et que la surface de la pente est calculable par le signal du temps de la réception des trois signaux reflétés.

5. Dispositif selon la revendication 4, **caractérisé en ce que** les trois signaux sont émettables dans le même plan.

6. Dispositif selon la revendication 5, **caractérisé par le fait qu'** au moins un signal est émettable dans un plan qui est différent du plan déterminé par les trois signaux et que le reflet de ce signal est compris dans la calculation de la pente.

7. Dispositif pour déterminer la pente du green, **caractérisé en ce qu'**un appareil selon l'une des revendications précédentes est mis en position au-dessus de la ligne reliante entre la balle et le trou, et **en ce qu'**une des valeurs, soit l'inclinaison de la ligne reliante, soit la pente latérale du green est déterminée à l'endroit où la balle est censée rouler.

8. Dispositif selon la revendication 7, **caractérisé en ce qu'** une distance équivalente ou un break-distance équivalent est indiqué comme valeur mesurée.
